Europäisches Patentamt

European Patent Office

Office européen des brevets

(19)

(11) **EP 0 448 136 B1**

(12) **EUROPEAN PATENT SPECIFICATION**

(45) Date of publication and mention
of the grant of the patent:
**16.10.1996 Bulletin 1996/42**

(51) Int Cl.$^6$: **G05D 13/62**

(21) Application number: **91109323.5**

(22) Date of filing: **10.06.1987**

(54) **Motor rotation control apparatus**

Motorumdrehungszahl-Regelgerät

Appareil de commande de la rotation d'un moteur

(84) Designated Contracting States:
**DE FR GB NL**

(30) Priority: **10.06.1986 JP 134685/86**
           **10.06.1986 JP 134684/86**

(43) Date of publication of application:
**25.09.1991 Bulletin 1991/39**

(62) Application number of earlier application in
accordance with Art. 76 EPC: **87305148.6**

(73) Proprietor: **SONY CORPORATION**
**Tokyo 141 (JP)**

(72) Inventors:
• **Machida, Yukihiko, c/o Patents Division**
  **Shinagawa-ku, Tokyo 141 (JP)**
• **Tomitaka, Tadafusa, c/o Patents Division**
  **Shinagawa-ku, Tokyo 141 (JP)**

(74) Representative: **Cotter, Ivan John et al**
**D. YOUNG & CO.**
**21 New Fetter Lane**
**London EC4A 1DA (GB)**

(56) References cited:
**GB-A- 2 123 584         US-A- 4 254 367**

• **PATENT ABSTRACTS OF JAPAN vol. 8, no. 81
(E-238)(1518) 13 April 1984 & JP-A-59 002 574**

# Description

This invention relates to apparatus for controlling rotation of a motor.

Motor speed servo control apparatuses have been employed for controlling the speed of rotation of motors used to drive video tape recorder (VTR) drums. It is current practice to perform such motor speed control based upon a motor speed signal having a series of pulses generated at a frequency corresponding to the motor speed as sensed by a frequency generator or like sensor operable in connection with the motor. One of several serious problems associated with this technique is reproduced picture distortion caused by noise superimposed on the motor speed signal when the drum or the frequency generator is mounted in an erroneous manner so as to cause drum rotation variances. Such noise superimposed on the motor speed signal has a frequency, of for example, 30 Hz, corresponding to the frequency of rotation of the drum.

In order to avoid the above-mentioned problem, it is current practice to design the motor speed servo control apparatus to have a characteristic such that the gain is reduced at a frequency of around 30 Hz. However, such gain reduction raises another problem in that the servo control accuracy is influenced considerably by torque variations.

Alternatively, it has been proposed to provide an analog notch filter to attenuate the gain at a frequency of around 30 Hz. However, this proposal is not suitable for applications to video tape recorders or the like in which the speed of rotation of the drum is changed to accommodate different modes of operation of the apparatus so that the frequency of the noise superimposed on the motor speed signal due to drum rotation variances changes from 30 Hz. Therefore, it is not appropriate to minimise reproduced picture distortion by employing a filter having a high quality factor or "Q" at a frequency of around 30 Hz.

US Patent US-A-4 254 367 discloses apparatus for controlling rotation of a motor. The apparatus comprises a clock signal generator, a speed control circuit and a phase control circuit. In the speed control circuit, a first pulse signal having a repetition rate that varies in accordance with sensed motor speed is supplied to an n-bit presettable counter which counts the clock signal during an interval corresponding to the first pulse signal repetition rate. The m least significant bits of the n-bit counter are latched in a latch, and control means controls the m-bit output from the latch so as to hold the output at a minimum level when the n-bit count of the counter is less than a first predetermined value and at a maximum level when the n-bit count is more than a second predetermined value. A digital to analog converter converts the m-bit output from the latch to an analog signal for controlling rotation of the motor. The control means also detects an output of the most significant bits of the counter. The phase control circuit derives a second pulse signal that represents the sensed instantaneous position of the motor, and has a k-bit counter for counting the clock signal during an interval corresponding to the phase difference between the second pulse signal and a reference phase signal. The k-bit output of the k-bit counter is loaded into the least significant k-bit positions of the n-bit counter at an interval corresponding to the repetition rate of the first pulse signal.

Japanese Patent Application Publication No. JP-A-59002574, an English language abstract of which appears at PATENT ABSTRACTS OF JAPAN, vol. 8, no. 81 (13-04-84), discloses a current command value calculating system for a power converter, in which a phase angle command of N bits outputted from a counter is isolated into an upper M-bit phase angle and a lower (N-M) bit phase angle. The lower phase angle is converted to a 1-bit signal, modulated, and added to the upper M-bit phase angle to produce an M-bit phase angle command value. The command value is inputted to ROMs. Outputs of the ROMs are multiplied by digital-to-analog converters by a current amplitude command from a speed control circuit, and the outputs are applied as armature current command values of respective phases of a synchronous motor to a power converter.

According to the invention there is provided apparatus for controlling rotation of a motor, the apparatus comprising:

a sensor sensitive to the motor's rotation speed and phase for generating speed and phase signals indicative of the sensed motor rotation speed and phase, respectively;

a first signal processor for processing the speed signal to provide a digital speed error signal comprising successive digital signal portions each having a predetermined number of bits and representing a speed error between the sensed motor rotation speed and a target motor rotation speed;

a second signal processor for processing the phase signal to provide a digital phase error signal comprising successive digital signal portions each having a predetermined number of bits and representing a phase error between the sensed motor rotation phase and a target motor rotation phase;

a data modification circuit connected to the second signal processor for dividing each of the successive digital phase error signal portions into a first digital signal portion having upper bits of data and a second digital signal portion having the remaining lower bits of data, the data modification circuit including means for adding the second digital signal portion to the next one of the successive digital error signal portions;

an adder circuit for adding the digital speed error signal from the first signal processor and the first digital signal portions from the data modification circuit to produce a digital output signal;

a gain control circuit for multiplying the digital speed error signal, before it is supplied to the adder circuit, by a first value and multiplying the first digital signal portion, before it is supplied to the adder circuit, by a second value which is smaller than the first value; and

a digital-to-analog converter for converting the digital output signal from the adder circuit into a corresponding analog signal to be used to control the motor rotation.

Preferred embodiments of the invention described hereinbelow provide a simple motor rotation servo control apparatus which can control motor rotation with high accuracy. One of the preferred embodiments employs a comb filter circuit to attenuate noise resulting from motor rotation variances. The preferred embodiments can employ inexpensive components to effect accurate motor rotation servo control so as to minimize wow and flutter.

Apparatus embodying the invention may (for example) be used in video tape recorders and the like for providing accurate servo control of motor rotation.

The invention will now be further described, by way of illustrative and non-limiting example, with reference to the accompanying drawings, in which like references identify like elements in the several figures, and in which:

Figure 1 is a schematic block diagram of a comb filter circuit which can be used in apparatus embodying the invention;

Figure 2 shows two waveforms used in explaining how speed error data is formed;

Figure 3 shows four waveforms obtained at different points in the comb filter circuit;

Figure 4 is a graph showing the gain versus frequency characteristic of the comb filter circuit;

Figure 5 is a schematic block diagram of a first motor rotation control apparatus;

Figure 6 shows three waveforms used in explaining a manner in which phase error data is formed;

Figure 7 is a schematic block diagram of a second motor rotation control apparatus, which apparatus embodies the invention;

Figure 8 is a diagram used in explaining how speed and phase error data are added before application to a digital-to-analog converter;

Figure 9 is a schematic block diagram of a modified form of data modification circuit that can be used in motor rotation control apparatus embodying the invention;

Figure 10 is a schematic block diagram of a third motor rotation, control apparatus, which apparatus embodies the invention; and

Figure 11 is a schematic block diagram of a comb filter circuit that can be used in the apparatus of Figure 10.

Before the first to third motor control apparatuses mentioned above are described, a description will first be given of a comb filter circuit can be used in the first and third motor rotation control apparatuses for removal of a direct current (DC) component and a 30 Hz component and higher harmonics thereof from a signal inputted thereto.

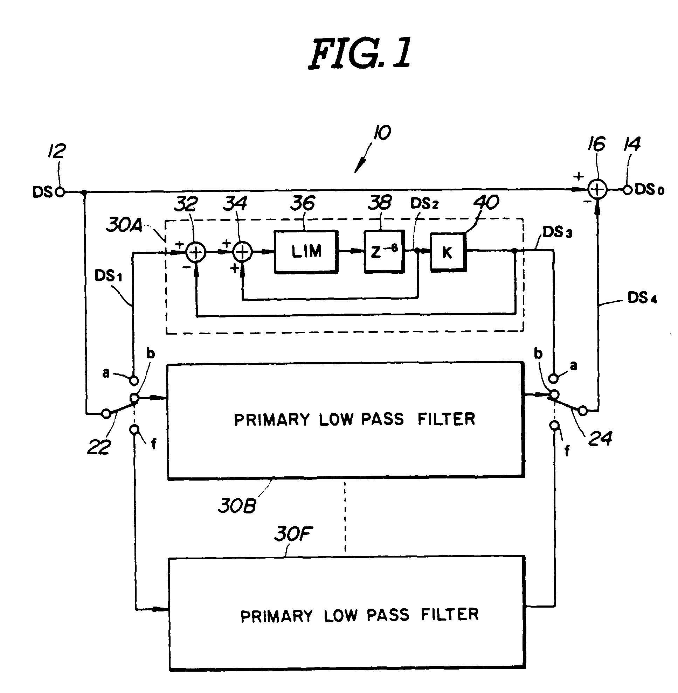

Figure 1 shows the comb filter circuit 10 to have an input terminal 12 and an output terminal 14. The input terminal 12 is connected to one input of an adder 16 which has an output connected to the output terminal 14. The input terminal 12 is also connected to a wiper of a six position switch 22 having six contacts 22a to 22f connected through respective digital primary low pass filters 30A to 30F to corresponding fixed contacts 24a to 24f of a six position switch 24 having a wiper connected to another input of the subtracter 16. Although, for purposes of clarity, only the contacts 22a, 22b, and 22f, the filters 30A, 30B, and 30F, and the contacts 24a, 24b, and 24f have been shown, it will be understood that the other elements, corresponding to those which are shown, are present.

The digital primary low pass filter 30A includes a subtractor 32 having an input connected to the fixed contact 22a. An output of the subtracter 32 is coupled to an integrator comprising an adder 34, a limiter 36 and a delay circuit 38. The adder 34 receives an input from the subtracter 32 and has an output connected through the limiter 36 to the delay circuit 38. An output of the delay circuit 38 is connected to another input of the adder 34 and also to a multiplier 40 having a multiplication factor K smaller than unity. An output of the multiplier 40 is coupled to the fixed contact 24a. The other digital primary low pass filters 30B...30F are of substantially the same structure as the primary low pass filter 30A.

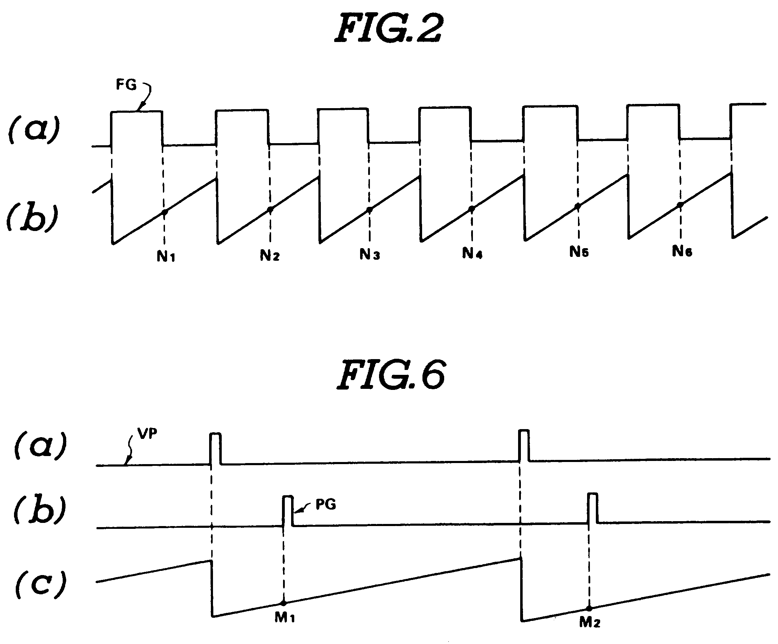

Referring to Figure 2, a waveform (a) represents a series of pulses FG generated at a frequency corresponding to a drum motor speed sensed by a sensor. The pulses FG are used to control a counter in such a manner that the counter is cleared and starts counting clock pulses at the leading edge of each of the pulses FG and its count is sampled at the trailing edge of each pulse FG, as shown by a waveform (b) in Figure 2. The sampled values N1, N2, N3... constitute speed error data DS which is used to rotate the motor at a constant speed. If, however, errors occur upon mounting the drum or the sensor, a 30 Hz component and its higher harmonics, which are multiples of the DC component and the 30 Hz component, may be superimposed on the speed error data DS, causing picture distortion. The filter circuit 10 can remove the 30 Hz component and higher harmonics thereof from the speed error data DS, in a manner which will now be described.

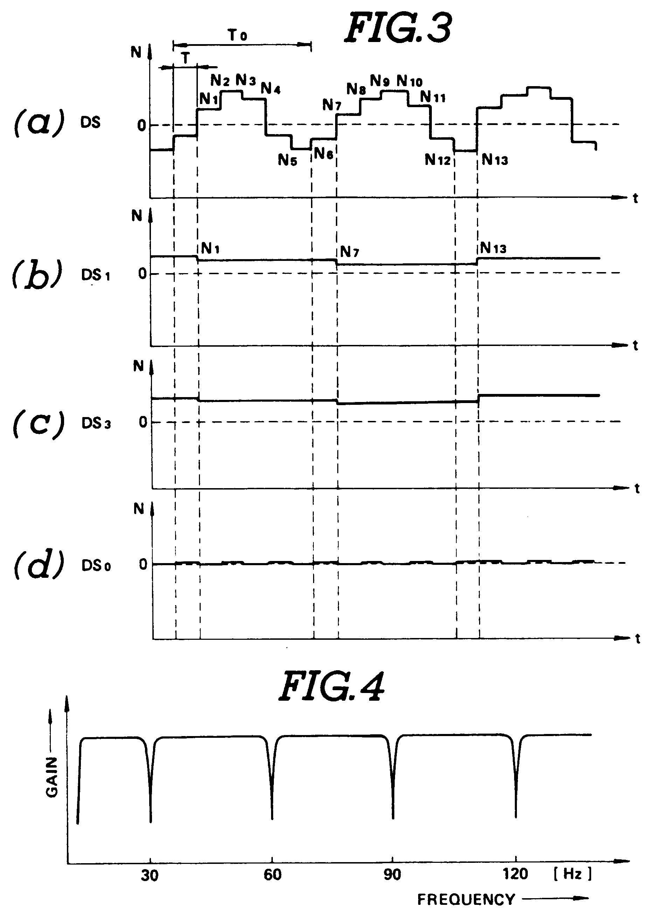

Assume that the comb filter circuit 10 receives, at its input terminal 12, speed error data DS including the sampled values N1, N2, N3..., as shown by a waveform (a) in Figure 3. The switches 22 and 24 receive the sampling signal from the counter and are thereby switched in synchronism with the times at which the counts N1, N2, ... of the counter are sampled in such a manner that the comb filter 30A can handle sampled counts N1, N7, N13,..., the primary low pass filter 30B (not shown) can handle sampled counts N2, N8, N14,..., the primary low pass filter 30C (not shown) can handle sampled counts N3, N9, N15,..., the primary low pass filter 30D (not shown) can handle sampled counts N4, N10, N16,..., the primary low pass filter 30E (not shown) can handle sampled counts N5, N11, N17,..., and the primary low pass filter 30F can handle sampled counts N6, N12, N18, ....

When each of the counts N1, N7, N13,... is sampled, the switch 22 is set to connect the input terminal 12 to the primary low pass filter 30A and the switch 24 is set to connect the primary low pass filter 30A to the adder 16. As a result, speed error data DS1, as shown by a waveform (b) in Figure 3, is fed to the primary low pass filter 30A. The data DS1 is fed to the subtracter 32 and from there to the integrator comprising the adder 34, the limiter 36 and the delay circuit 38. The limiter 36 limits the dynamic range of the signal inputted thereto. The delay circuit 38 delays the signal inputted thereto for a time during which six counter counts are sampled; that is, for the time take for the drum motor to make a full rotation. The delay circuit 38 generates data DS2 which is fed back to the adder 34 where it is added to the next data fed thereto from the subtracter 32. For example, if the data DS2 corresponds to the sampled count N1, the adder 34 adds the data DS2 to the data corresponding to the count N7 sampled in the following sampling cycle. The data DS2 represent the average value of the data DS1. The data DS2 is fed to the multiplier 40 where the data DS2 is multiplied by the multiplication factor K smaller than unity to develop data DS3. The data DS3 represent an error of each of the sampled counts N1, N2, N3, ... from a centre value (zero level), as shown by a waveform (c) in Figure 3. The primary low pass filter 30A thus functions in a manner substantially equivalent to a resistive-capacitive (RC) low pass filter for analog signals. The data DS3 is fed back to the subtracter 32 which subtracts the data DS3 from the data DS1. The data DS3 is fed from the multiplier 40 to the subtracter 16 which subtracts the data DS3 from the data DS1.

In a similar manner, the switches 22 and 24 are set to operate the other primary low pass filters 30B to 30F successively. The result is that the subtracter 16 receives data DS4 which represents the 30 Hz component and its higher harmonics extracted from the data DS. The adder 16 subtracts the data DS4 from the original data DS to remove the 30 Hz component and its higher harmonics from the data DS. The resultant data DSO developed at the output terminal 14 is shown by a waveform (d) in Figure 3.

Figure 4 shows the gain versus frequency characteristic of the comb filter circuit 10. It is to be noted that the frequencies of 30 Hz, 60 Hz and 90 Hz correspond to drum motor rotational frequencies selected in various respective modes of operation of a video tape recording playback apparatus in which the drum motor is incorporated. Therefore, the comb filter circuit 10 is effective to remove noise components superimposed on the speed error data due to nonuniform motor rotation at any selected motor speed.

Normally, the input data DS has a DC component which represents a reference value for motor speed. Since the DC component remains on the data DS4, the subtracter 16 removes the DC component when it subtracts the data DS4 from the data DS. This means that the comb filter circuit 10 cannot transmit a DC component. In order to transmit such a DC component, the comb filter circuit 10 would have to be provided with a very complex and expensive circuit which can calculate the average value of the outputs of the respective comb filters 30A to 30F or the average value of the input data DS and subtract the calculated average value from the data DS4.

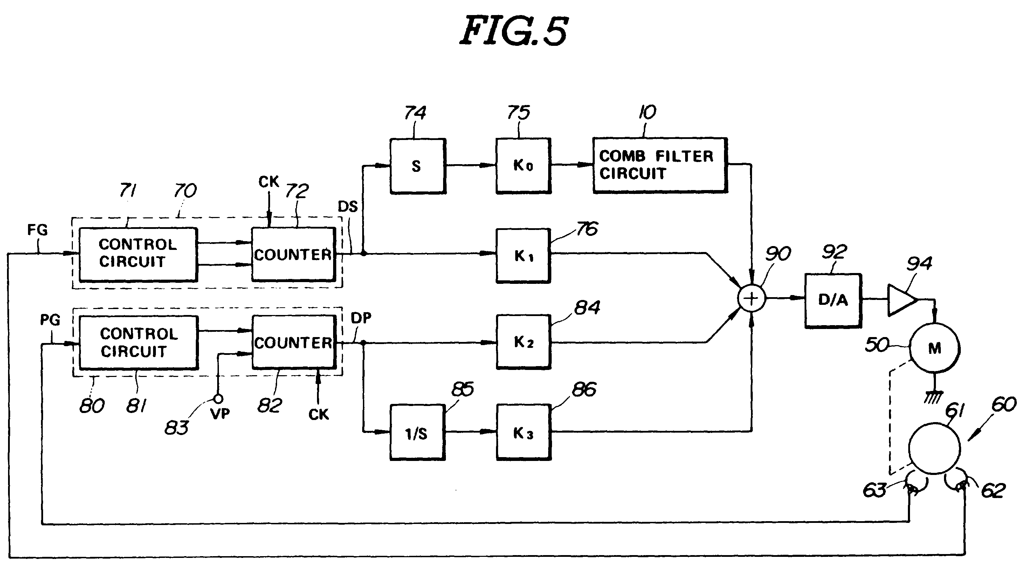

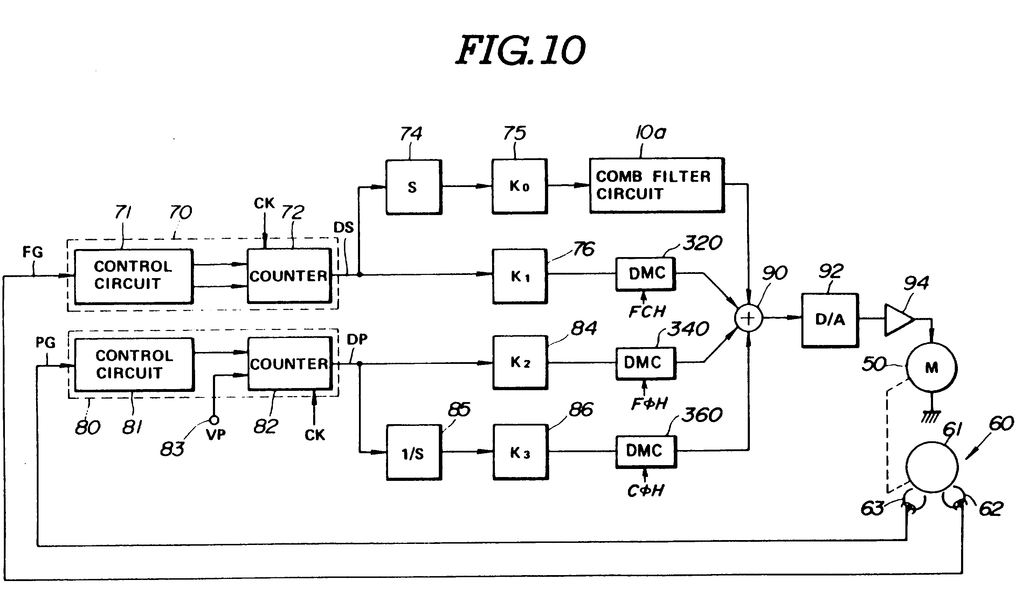

Motor rotation control apparatuses described hereinbelow with reference to Figure 5 and 10 employ a simple circuit associated with such a filter circuit as is shown in Figure 1 to permit DC component transmission.

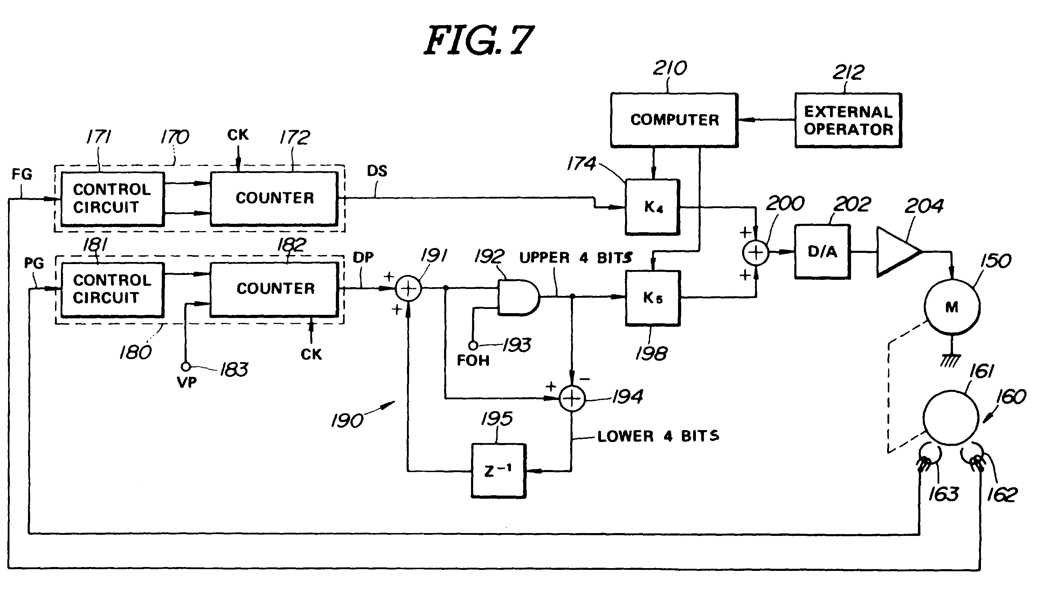

Figure 5 shows a first motor rotation control apparatus. The apparatus includes speed-servo and phase-servo loops for controlling rotation of a drum motor 50 in a manner to rotate a drum (not shown) at a constant speed. The apparatus includes a motor rotation sensor 60 having a frequency generator or pulse generator 61 operable in connection with the drum motor 50 and first and second heads 62 and 63 disposed in close proximity to the circumference of the generator 61 for generating signals which indicate the speed and phase of rotation of the drum motor 50. The first head 62 develops a series of pulses FG at a frequency corresponding to the speed of the drum motor 50, as shown by the waveform (a) in Figure 2. The second head 63 develops a series of pulses PG each corresponding to 360 degrees of rotation of the drum motor 50, as shown by a waveform (b) in Figure 6. The pulses FG are fed from the first head 62 to a speed error data forming circuit 70 which forms a part of the speed servo loop. The pulses PG are fed from the second head 63 to a phase error data forming circuit 80 which forms a part of the phase servo loop.

The speed error data forming circuit 70 is shown in schematic form as including a control circuit 71 connected to control a counter 72. The control circuit 71 develops a reset/start (RSC) command signal at the leading edge of each of the pulses FG and a sample (SC) command signal at the trailing edge of each of the pulses FG. Upon occurrence of such a reset/start (RSC) command signal, the counter 72 clears its count and starts counting clock pulses CK generated at a predetermined frequency of, for example, 1 MHz. The sample (SC) command signal is applied to sample the count N of the counter 72. The speed error data forming circuit 70 produces speed error data DS which includes the count values N1, N2, N3, ... that are sampled in a sequential fashion, as shown in Figure 2(b).

An output of the speed error data forming circuit 70 is coupled to one input of an adder or adder circuit 90 through a series circuit of a differentiating circuit 74, a first multiplier circuit 75 and the filter circuit 10, and to another input of the adder 90 through a second multiplier circuit 76. The differentiating circuit 74 differentiates the speed error data DS to convert it into angular acceleration error data. It is to be noted that the DC component of the speed error data DS is removed while it is differentiated in the differentiating circuit 74 and the angular acceleration error data has an AC component only with no DC component. The first multiplier 75 has a predetermined first multiplication factor K0 and multiplies the angular acceleration error data by the first multiplication factor to provide a weighting for the data communicated therethrough. The multiplied angular acceleration error data is fed from the first multiplier circuit 75 to the filter circuit 10. The filter circuit 10 removes the 30 Hz component and higher harmonics thereof which may be superimposed on the received data, in the same manner as described above with reference to Figure 1. The second multiplier circuit 76 has a predetermined second multiplication factor K1 and multiplies the speed error data DS by the second multiplication factor K1 to provide a weighting for the data communicated therethrough. The loop including the second multiplier 76 is effective to communicate a DC component which represents a target or reference motor speed required to control the drum motor 50.

The phase error data forming circuit 80 is shown in schematic form as including a control circuit 81 connected to control a counter 82. The control circuit 81 develops a sample (SC) command signal at the leading edge of each of the PG pulses fed thereto from the second head 63. A vertical synchronisation signal VP, shown in Figure 6 (a), is applied at a terminal 83 to cause the counter 82 to clear its count and start counting clock pulses CK generated at a predetermined frequency of, for example, 1 MHz. The sample (SC) command signal is applied from the control circuit 81 to sample the count M of the counter 82. The phase error data forming circuit 80 produces phase error data DP which include count values M1, M2, ... that are sampled in a sequential fashion, as shown in Figure 6 (c).

An output of the phase error data forming circuit 80 is coupled to a further input of the adder 90 through a third multiplier circuit 84 and is connected to yet another input of the adder 90 through a series circuit of an integration circuit 85 and a fourth multiplier circuit 86. The third multiplier circuit 84 has a predetermined third multiplication factor K2 and multiplies the phase error data DP by the third multiplication factor K2 to provide a weighting for the data communicated therethrough. The integration circuit 85 integrates the phase error data DP. The fourth multiplier circuit 86 has a predetermined fourth multiplication factor K3 and multiplies the integrated data by the fourth multiplication factor K3 to increase the gain of the phase servo loop for low-frequency band components.

The adder 90 adds the data fed from the filter circuit 10 from and the second, third and fourth multiplier circuits 76, 84 and 86. The summed or added data is fed from the adder 90 to a digital-to-analog (D/A) converter 92 which converts it into a corresponding analog control signal. This control signal is applied to a drive amplifier circuit 94 which thereby controls the speed and phase of rotation of the drum motor 50.

In the illustrated apparatus, the first, second, third and fourth multiplication factors K0, K1, K2 and K3 are set in accordance with the relationship K0>K1>K2>K3 in order that the motor rotation control apparatus has a faster response to a speed error than to a phase error.

In the illustrated apparatus, the speed error data DS is differentiated to have its DC component removed before the data is processed in the filter circuit 10 so that the filter circuit 10 can handle the AC component only. This permits the rotation control apparatus to remove only the component related to the actual variances of rotation of the drive motor 50. This effect is improved by the first multiplier circuit 75, which has the greatest multiplication factor K0. In addition, the DC component produced by a hold means in the counter 72, which represents a target or reference motor speed required to control the drum motor, is communicated through the second multiplier circuit 76 to the adder 90.

Although this apparatus has been described in connection with a digital servo circuit, it is to be noted that it is equally applicable to analog servo circuits, in which case the delay circuit 38 (Figure 1) may use a charge coupled device (CCD) element.

According to this apparatus, it is possible to remove errors introduced into motor rotation servo control due to motor rotation variances by a simple circuit arrangement. In addition, it is possible to handle superimposed noise and its higher harmonics by only using comb filters having a high quality factor or "Q". This is effective to avoid low-frequency band phase shift and to achieve stable and accurate motor rotation control.

Figure 7 shows a second motor rotation control apparatus, which apparatus embodies the invention. The apparatus includes speed-servo and phase-servo loops for controlling rotation of a drum motor 150 in a manner to rotate a drum (not shown) at a constant speed. The apparatus includes a motor rotation sensor 160 which includes a frequency generator or pulse generator 161 operable in connection with the drum motor 150, and first and second heads 162 and 163 disposed in close proximity to the circumference of the generator 161 for generating signals which indicate the speed and phase of rotation of the drum motor 150. The first head 162 develops a series of pulses FG at a frequency corresponding to the speed of the drum motor 150, for example, three pulses for one rotation of the drum motor 150, as shown by the waveform (a) in Figure 2. The second head 163 develops a series of pulses PG each corresponding to 360 degrees of rotation of the drum motor 150, as shown by the waveform (b) in Figure 6. The pulses FG are fed from the first head 162 to a speed error data forming circuit 170 which forms a part of the speed servo loop. The pulses PG are fed from the second head 163 to a phase error data forming circuit 180 which forms a part of the phase servo loop.

The speed error forming circuit 170 is shown in schematic form as including a control circuit 171 connected to control a speed error counter 172. The control circuit 171 develops a reset/start (RSC) command signal at the leading edge of each of the pulses FG and a sample (SC) command signal at the trailing edge of each of the pulses FG. Upon occurrence of such a reset/start (RSC) command signal, the speed error counter 172 clears its count and starts counting clock pulses CK generated at a predetermined frequency of, for example, 1 MHz. The sample (SC) command signal is applied to sample the count of the speed error counter 172. The speed error data forming circuit 170 produces speed error data DS which includes the count values N1, N2, N3, ... that are sampled in a sequential fashion, as shown in Figure 2(b).

An output of the speed error data forming circuit 170 is coupled to one input of an adder 200 through a first gain control circuit 174 which may be in the form of a multiplier circuit having a predetermined multiplication factor K4. The first gain control circuit 174 multiplies the speed error data DS by the multiplication factor K4 to provide a weighting for the data communicated therethrough.

The phase error data forming circuit 180 is shown in schematic form as including a control circuit 181 connected to control a phase error counter 182. The control circuit 181 develops a sample (SC) command signal at the leading edge of each of the pulses PG fed thereto from the second head 163. A vertical synchronisation signal VP is applied at a terminal 183 to cause the phase error counter 182 to clear its count and start counting clock pulses CK generated at a predetermined frequency of, for example, 1 MHz. The sample (SC) command signal is applied from the control circuit 181 to sample the count M of the phase error counter 182. The phase error data forming circuit 180 produces phase error data DP which includes the count values M1, M2,... that are sampled in a sequential fashion, as shown in Figure 6 (c).

An output of the phase error data forming circuit 180 is coupled through a data modification circuit 190 to a second gain control circuit 198 and from there to another input of the adder 200. The second gain control circuit 198 may be in the form of a multiplier circuit having a predetermined multiplication factor K5 to provide a weighting for the data communicated therethrough. A computer 210 can change the gains K4 and K5 based upon data inputted thereto from an external operator 212.

The data modification circuit 190 includes an adder 191 having an input from the phase error data forming circuit 180. The adder 191 has an output connected to one input of an AND gate 192 having another input connected to a terminal 193 to which a signal having a code FOH represented as "11110000" is applied. The output of the adder 191 is also connected to one input of a subtracter 194 which has another input connected to the output of the AND gate 192. The output of the subtracter 194 is connected through a delay circuit 195 to another input of the adder 191. The output of the AND gate 192 is connected to the second gain control circuit 198.

The adder 200 adds the data fed thereto from the first and second gain control circuits 174 and 198. The summed or added data is fed from the adder 200 to a digital-to-analog (D/A) converter 202 which converts it into a corresponding analog control signal. This control signal is applied to a drive amplifier circuit 204 which thereby controls the speed and phase of the drum motor 150.

The operation of the data modification circuit 190 will now be described. First of all, for purposes of this explanation, assume that the output of the phase error data forming circuit 180 is connected directly to the second gain control circuit 198 with the data modification circuit 190 being removed. The first gain control circuit 174 multiplies the speed error data DS by the multiplication factor K4 and produces data represented as K4 x DS. The second gain control circuit 198 multiplies the phase error data DP by the multiplication factor K5 and produces data represented as K5 x DP. The adder 200 adds the data K4 X DS and the data K5 X DP. Assuming now that both the speed error data DS and the phase error data DP are 8-bit data and that the multiplication factor K4 is set at about 1 and the multiplication factor K5 is set at $2^{-4}$, the data outputted from the adder 200 is represented as:

$$K4 \text{ X } DS + K5 \text{ X } DP = DS + 2^{-4} \text{ X } DP$$

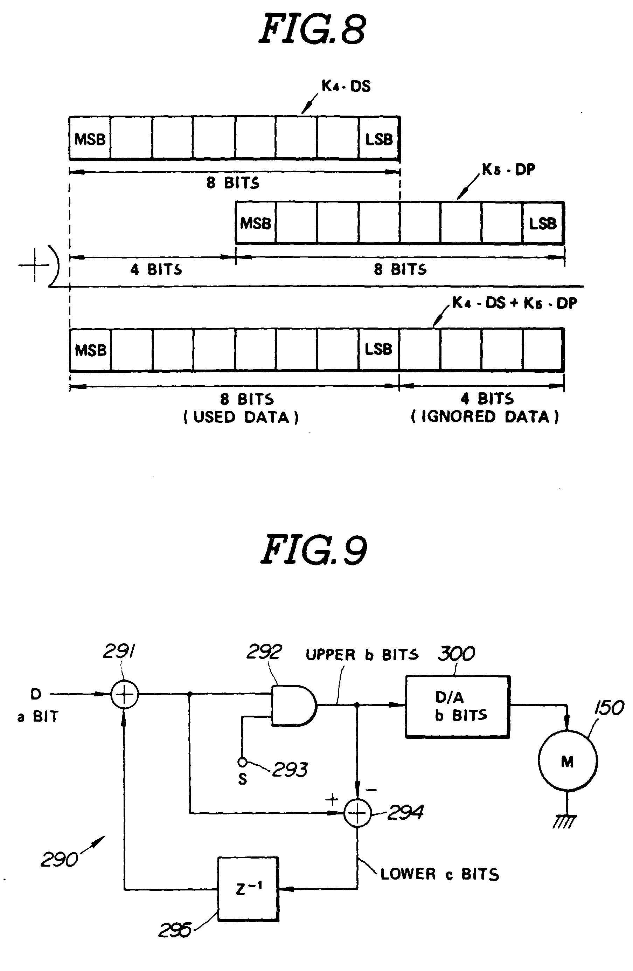

As shown in Figure 8, in which the abbreviations "MSB" and "LSB" represent "most significant bit" and "least significant bit", respectively, the data $2^{-4}$ X DP is equivalent to the phase error data DP shifted by four bits towards the lower bit side and, thus, the added data DS/$2^{-4}$ X DP is 12-bit data. The added data is fed to the D/A converter 202. It is preferable that the D/A converter 202 is an 8-bit converter in view of cost considerations. Such an 8-bit D/A converter converts the upper eight bits of digital data into analog form while omitting the other lower four bits of data. However, this manner of operation introduces noise into the control signal so as to degrade the motor rotation control accuracy, increase wow and flutter, and exert adverse influences on the signal, particularly in its low frequency band. Although it may be possible to overcome the problem by employing a 13-bit D/A converter, such a converter is too costly to be used in such an apparatus.

The data modification circuit 190 provides an elegant solution to the above problems. The AND gate 192 is open to communicate the data from the adder 191 to the second gain control circuit 198 when it receives a logic 1 level signal at its other input to which the FOH code signal "11110000" is applied. Therefore, the AND gate 192 communicates the upper four bits of data of the 8-bit phase error data DP to the second gain control circuit 198 and also to the subtracter 194, which subtracts the upper four bits of data from the 8-bit phase error data DP fed thereto from the adder 191. As a result, the subtracter 194 develops a signal representing the lower four bits of data. The lower four bits of data are fed to the delay circuit 195, which provides a predetermined time delay relative to the signal applied thereto from the subtracter 194, the predetermined time delay corresponding to one sampling interval at which the count values M1, M2,... are sampled, as shown in Figure 6(c). The delay circuit 195 may employ a memory, an eight-bit shift register, or the like capable of delaying the lower four bits of data for a time corresponding to the time interval at which the count values M1, M2, ... are sampled, as shown in Figure 6(c). The adder 191 adds the lower four bits of data of the previously sampled phase error data DP to the lower four bits of data of the presently sampled phase error data DP in such a manner that 1 is added to the digit at the fourth bit position from the most significant bit (MSB) of the phase error data DP. The added data is fed through the subtracter 194 and the delay circuit 195 to the adder 191 again. This operation is repeated so that the adder 191 accumulates the lower four bits of data.

When the lower four bits of data are accumulated, 1 is added to the digit at the fourth bit position from the most significant bit (MSB) of the phase error data DP; that is, at the lowermost bit position of the upper four bits of data obtained from the AND gate 192. The upper four bits of data are fed to the second gain control circuit 198.

Figure 9 shows a modified form of the data modification circuit that can be applied to more general purposes. This modification is effective to compensate for the lower bits of data of a-bit error data inputted to the data modification circuit, the upper bits of data being fed to a D/A converter 300 having a processing capacity equal to an effective number b of bits smaller than the number a of bits of the error data.

In Figure 9, the data modification circuit, designated by the numeral 290, includes an adder 291 having an input to which a-bit data D is fed. The adder 291 has an output connected to one input of an AND gate 292 having another input connected to a terminal 293 to which a signal S having a code is applied for extracting the upper bits (b-bits) of data from the inputted a-bit data D. The output of the adder 291 is also connected to one input of a subtracter 294 which has another input connected to an output of the AND gate 292. An output of the subtracter 294 is connected through a delay circuit 295 to another input of the adder 291. The output of the AND gate 292 is connected to the D/A converter 300 which converts a b-bit digital signal into a corresponding analog signal which is used to control a motor 150.

The AND gate 292 is open to communicate the data from the adder 291 to the D/A converter 300 when it receives a logic 1 level signal at the other input 293 to which the code signal S is applied. Therefore, the AND gate 292 communicates the upper b bits of data of the a-bit data D to the D/A converter 300 and also to the subtracter 294 which subtracts the upper b bits of data from the a-bit data D fed thereto from the adder 291. As a result, the subtracter 294 develops a signal representing the lower c (a-b) bits of data. The lower c bits of data are fed to the delay circuit 295, which provides a predetermined time delay relative to the signal applied thereto from the subtracter 294, the predetermined time delay corresponding to one sampling interval at which the data D is formed. The delay circuit 295 may employ a memory, a shift register, or the like capable of delaying the lower c bits of data by a time corresponding to the one sampling interval. The adder 291 adds the lower c bits of data of the previously sampled data D to the lower c bits of data of the presently sampled data D in a similar manner to that described with reference to Figure 7. The added data is fed through the subtracter 294 and the delay circuit 295 and applied to the adder 291 again. This operation is repeated so that the adder 291 accumulates the lower c bits of data. When the lower c bits of data are accumulated, 1 is added to the digit at the lowermost bit position of the upper b bits of data. The upper b bits of data are fed to the D/A converter 300 where they are converted into digital form for controlling the motor 150. It is, therefore, apparent that the apparatus is effective to improve the motor rotation control accuracy.

Figure 10 shows a third servo control apparatus, which apparatus embodies the invention. The apparatus of Fig. 10 is substantially the same as the apparatus shown in and described with reference to Figure 5, except for the provision of a data modulation circuit in each of the circuits to the adder 90 and except for the comb filter circuit (referenced 10a in Figure 10) being of a different construction. Accordingly, parts in Figure 10 which are like parts in Figure 5 are designated by like references.

In this embodiment, a data modulation circuit 320 is provided in line between the second multiplier circuit 76 and the adder 90. The data modulation circuit 320 is substantially the same as the data modulation circuit 290 shown in and described with reference to Figure 9 except for the code signal applied to the other input 293 of the AND gate 292. The code signal FCH, which is dependent on the multiplication factor K1, is selected in a manner permitting the D/A converter 92 to convert the input digital data into analog form without omitting any part of the digital data, as described with reference to Figures 7 and 9. For example, the code signal FCH may be "11111100" if the multiplication factor K1 is $2^{-2}$. A data modulation circuit 340 is provided in a line between the second multiplier circuit 84 and the adder 90. The data modulation circuit 340 is substantially the same as the data modulation circuit 290 shown in and described with reference to Figure 9 except for the code signal applied to the other input 293 of the AND gate 292. The code signal FØH, which is dependent on the multiplication factor K2, is selected in a manner permitting the D/A converter 92 to convert the input digital data into analog form without omitting any part of the digital data, as described with reference to Figures 7 and 9. For example, the code signal FØH may be "11110000" if the multiplication factor K2 is $2^{-4}$. A data modulation circuit 360 is provided in a line between the second multiplier circuit 86 and the adder 90. The data modulation circuit 360 is substantially the same as the data modulation circuit 290 shown in and described with reference to Figure 9 except for the code signal applied to the other input 293 of the AND gate 292. The code signal CØH, which is dependent on the multiplication factor K3, is selected in a manner permitting the D/A converter 92 to convert the input digital data into analog form without omitting any part of the digital data, as described with reference to Figures 7 and 9. For example, the code signal FØH may be "11000000" if the multiplication factor K3 is $2^{-6}$.

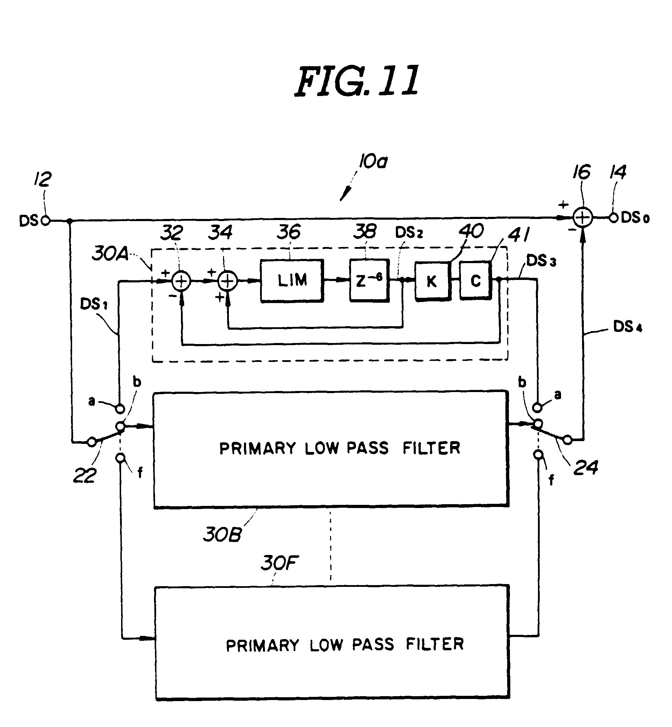

The comb filter circuit 10a is shown in detail in Figure 11. The comb filter circuit 10a is substantially the same as the comb filter circuit 10 described with reference to Figure 1 except for a data modification circuit 41 which is connected at the output of the multiplier 40. The data modification circuit 41 is substantially the same as the data modulation circuit 290 shown in and described with reference to Figure 9 except for the code signal applied to the other input 293 of the AND gate 292. The code signal, which is dependent on the multiplication factor K, is selected in a manner permitting the D/A converter 92 to convert the input digital data into analog form without omitting any part of the digital data, as described with reference to Figures 7 and 9.

**Claims**

1. Apparatus for controlling rotation of a motor, the apparatus comprising:

    a sensor (60; 160) sensitive to the motor's rotation speed and phase for generating speed and phase signals (FG, PG) indicative of the sensed motor rotation speed and phase, respectively;
    a first signal processor (70; 170) for processing the speed signal (FG) to provide a digital speed error signal (DS) comprising successive digital signal portions (N1, N2 etc.) each having a predetermined number of bits and representing a speed error between the sensed motor rotation speed and a target motor rotation speed;
    a second signal processor (80; 180) for processing the phase signal (PG) to provide a digital phase error signal (DP) comprising successive digital signal portions (M1, M2 etc.) each having a predetermined number of bits and representing a phase error between the sensed motor rotation phase and a target motor rotation phase;
    a data modification circuit (340; 190) connected to the second signal processor (80; 180) for dividing each of the successive digital phase error signal portions into a first digital signal portion having upper bits of data and a second digital signal portion having the remaining lower bits of data, the data modification circuit (340; 190) including means (191) for adding the second digital signal portion to the next one of the successive digital error signal portions;
    an adder circuit (90; 200) for adding the digital speed error signal (DS) from the first signal processor (70; 170) and the first digital signal portions from the data modification circuit (340; 190) to produce a digital output signal;
    a gain control circuit (76, 84; 174, 198) for multiplying the digital speed error signal (DS), before it is supplied to the adder circuit (90; 200), by a first value (K1; K4) and multiplying the first digital signal portion, before it is suppled to the adder circuit (90; 200), by a second value (K2; K5) which is smaller than the first value (K1; K4); and
    a digital-to-analog converter (92; 202) for converting the digital output signal from the adder circuit (90; 200) into a corresponding analog signal to be used to control the motor rotation.

2. Apparatus according to claim 1, wherein the data modification circuit (190) includes an AND gate (192) having one input connected to the second signal processor (180) and another input connected to a source of a code signal (FOH) for opening the AND gate (192) to communicate the first digital signal portion having the upper bits of data to the gain control circuit (198), and means (194) for subtracting the first digital signal portion from the digital phase error signal portion to produce the second digital signal portion having the lower bits of data.

3. Apparatus according to claim 2, wherein the data modification circuit (190) includes a delay circuit (195) for delaying the second digital signal portion for a predetermined time, and said adding means (191) of the data modification circuit comprises an adder (191) having an input connected to the second signal processor (180) and another input connectcd to the delay circuit (195) for adding the second digital signal portion to the next digital error signal portion, the adder having an output connected to said one input of the AND gate (192).

4. Apparatus according to claim 1, which includes means (74) connected to the first signal processor (70) for extracting an alternating current component from the digital speed error signal, and a comb filter circuit (10a) interposed between the alternating current component extracting means (74) and the adder (90) for filtering out a motor rotation componcnt, which may be superimposed on the speed signal at a frequency of rotation of the motor and higher harmonics thereof, from the alternating current component to provide a filtered signal, and wherein the adder (90) is operative to add the digital speed error signal (DS) from the first signal processor (70), the first digital signal portion from the data modification circuit (340), and the filtered signal from the comb filter circuit (10a) to provide the digital output signal.

5. Apparatus according to claim 6, wherein the comb filter circuit (10a) includes an input terminal (12) connected to the alternating current component extracting means (74), an output terminal (14) connected to the adder (90), a plurality of primary low pass filters (30A to 30F), and switching means (22, 24) for connecting different ones of the primary low pass filters (30A, 30F) between the input and output terminals (12, 14) in a predetermined sequence at a predetermined number of degrees of rotation of the motor.

## Patentansprüche

1. Gerät zur Regelung der Umdrehung eines Motors, wobei das Gerät aufweist:

einen Sensor (60; 160), der auf die Drehzahl und Phase des Motors anspricht, um Drehzahl- bzw. Phasensignale (FG, PG) zu erzeugen, die die abgetastete Drehzahl bzw. Phase des Motors anzeigen;
einen ersten Signalprozessor (70; 170) zur Verarbeitung des Drehzahlsignals (FG), um ein digitales Drehzahlfehlersignal (DS) bereitzustellen, welches aufeinanderfolgende digitale Signalbereiche (N1, N2, usw.) umfaßt, wobei jeder eine vorgegebene Anzahl von Bits besitzt und einen Drehzahlfehler zwischen der abgetasteten Motordrehzahl und einer Soll-Motordrehzahl darstellt;
einen zweiten Signalprozessor (80; 180) zur Verarbeitung des Phasensignals (PG), um ein digitales Phasenfehlersignal (DP) bereitzustellen, welches aufeinanderfolgende digitale Signalbereiche (M1, M2, usw.) umfaßt, wobei jeder eine vorgegebene Anzahl von Bits besitzt und einen Phasenfehler zwischen der abgetasteten Motorumdrehungsphase und einer Soll-Motorumdrehungsphase darstellt;
eine Datenmodifikationsschaltung (340; 190), die mit dem zweiten Signalprozessor (80; 180) verbunden ist, um jeden der aufeinanderfolgenden digitalen Phasenfehlersignalbereiche in einen ersten digitalen Signalbereich zu unterteilen, der obere Datenbits hat, und einen zweiten digitalen signalbereich, der die verbleibenden unteren Datenbits hat, wobei die Datenmodifikationsschaltung (340; 190) eine Einrichtung (191) zum Addieren des zweiten digitalen Signalbereichs zum nächsten der aufeinanderfolgenden digitalen Fehlersignalbereiche aufweist;
eine Addierschaltung (90; 200) zum Addieren des digitalen Drehzahlfehlersignals (DS) vom ersten Signalprozessor (70; 170) mit den ersten digitalen Signalbereichen von der Datenmodifikationsschaltung (340; 190), um ein digitales Ausgangssignal zu erzeugen;
eine Verstärkungssteuerschaltung (76, 84; 174, 198) zum Multiplizieren des digitalen Drehzahlfehlersignals (DS), bevor es zur Addierschaltung (90; 200) geliefert wird, mit einem ersten Wert (K1; K4), und zum Multiplizieren des ersten digitalen Signalbereichs, bevor er zur Addierschaltung (90; 200) geliefert wird, mit einem zweiten Wert (K2; K5), der kleiner ist als der erste Wert (K1; K4); und
einen Digital-Analog-Umsetzer (92; 202) zur Umsetzung des digitalen Ausgangssignals von der Addierschaltung (90; 200) in ein entsprechendes analoges Signal, welches dazu verwendet wird, die Motorumdrehung zu steuern.

2. Gerät nach Anspruch 1, wobei die Datenmodifikationsschaltung (190) ein UND-Glied (192) aufweist, das einen Eingang besitzt, der mit dem zweiten Signalprozessor (180) verbunden ist, und einen weiteren Eingang, der mit einer Quelle eines Codesignals (FOH) verbunden ist, um das UND-Glied (192) zu öffnen, um den ersten digitalen Signalbereich, der die oberen Datenbits besitzt, zur Verstärkungssteuerschaltung (198) zu übermitteln, und eine Einrichtung (194) zur Subtrahierung des ersten digitalen Signalbereichs vom digitalen Phasenfehlersignalbereich, um den zweiten digitalen Signalbereich zu erzeugen, der die unteren Datenbits besitzt.

3. Gerät nach Anspruch 2, wobei die Datenmodifikationsschaltung (190) eine Verzögerungsschaltung (195) zur Verzögerung des zweiten digitalen Signalbereichs um eine vorgegebene Zeit aufweist, und wobei die Addiereinrichtung (191) der Datenmodifikationsschaltung ein Addierglied (191) umfaßt, das einen Eingang hat, der mit dem zweiten Signalprozessor (180) verbunden ist, und einen weiteren Eingang, der mit der Verzögerungsschaltung (195) verbunden ist, um den zweiten digitalen Signalbereich mit dem nächsten digitalen Fehlersignalbereich zu addieren, wobei das Addierglied einen Ausgang besitzt, der mit dem einen Eingang des UND-Glieds (192) verbunden ist.

4. Gerät nach Anspruch 1, welches eine Einrichtung (74) besitzt, die mit dem ersten Signalprozessor (70) verbunden ist, um eine Wechselstromkomponente aus dem digitalen Drehzahlfehlersignal zu extrahieren, und eine Kammfilterschaltung (10a), die zwischen der Wechselstromkomponenten-Extrahiereinrichtung (74) und dem Addierglied (90) angeordnet ist, um eine Motordrehzalkomponente, die dem Drehzahlsignal mit einer Umdrehungsfrequenz des Motors und deren höheren Harmonischen überlagert sein kann, aus der Wechselstromkomponente herauszufiltern, um ein gefiltertes Signal bereitzustellen, und wobei das Addierglied (90) tätig ist, das digitale Drehzahlfehlersignal (DS) vom ersten Signalprozessor (70), den ersten digitalen Signalbereich von der Datenmodifikationsschaltung (340) und das gefilterte Signal von der Kammfilterschaltung (10a) zu addieren, um das digitale Ausgangssignal bereitzustellen.

5. Gerät nach Anspruch 4, wobei die Kammfilterschaltung (10a) einen Eingangsanschluß (12), der mit der Wechselstromkomponenten-Extrahiereinrichtung (74) verbunden ist, einen Ausgangsanschluß (14), der mit dem Addierglied (90) verbunden ist, mehrere Primär-Tiefpaßfilter (30A bis 30F) und eine Schalteinrichtung (22, 24) aufweist, um verschiedene der Primär-Tiefpaßfilter (30A, 30F) zwischen dem Eingangs- und Ausgangsanschluß (12, 14) in einer vorgegebenen Folge bei einer vorgegebenen Zahl von Umdrehungsgraden des Motors zu verbinden.

## Revendications

1. Appareil de commande de la rotation d'un moteur, l'appareil comprenant :

   un capteur (60 ; 160) sensible à la vitesse de rotation et à la phase du moteur pour respectivement générer des signaux de vitesse et de phase (FG, PG) indicatifs de la vitesse de rotation et de la phase de moteur détectées ; un premier processeur de signal (70 ; 170) pour traiter le signal de vitesse (FG) afin de produire un signal d'erreur de vitesse numérique (DS) comprenant des parties de signal numérique successives (N1, N2 etc...) dont chacune comporte un nombre prédéterminé de bits et représente une erreur de vitesse entre la vitesse de rotation de moteur détectée et une vitesse de rotation de moteur cible ;
un second processeur de signal (80 ; 180) pour traiter le signal de phase (PG) afin de produire un signal d'erreur de phase numérique (DP) comprenant des parties de signal numérique successives (M1, M2 etc...) dont chacune comporte un nombre prédéterminé de bits et représente une erreur de phase entre la phase de rotation de moteur détectée et une phase de rotation de moteur cible ;
un circuit de modification de données (340 ; 190) connecté au second processeur de signal (80 ; 180) pour diviser chacune des parties de signal d'erreur de phase numérique successives en une première partie de signal numérique comportant des bits supérieurs de données et en une seconde partie de signal numérique comportant les bits inférieurs restants de données, le circuit de modification de données (340 ; 190) incluant un moyen (191) pour additionner la seconde partie de signal numérique à la partie suivante prise parmi les parties de signal d'erreur numérique successives ;
un circuit d'additionneur (90 ; 200) pour additionner le signal d'erreur de vitesse numérique (DS) provenant du premier processeur de signal (70 ; 170) et les premières parties de signal numérique provenant du circuit de modification de données (340 ; 190) afin de produire un signal de sortie numérique ;
un circuit de commande de gain (76, 84 ; 174, 198) pour multiplier le signal d'erreur de vitesse numérique (DS) avant qu'il ne soit appliqué sur le circuit d'additionneur (90 ; 200) par une première valeur (K1 ; K4) et pour multiplier la première partie de signal numérique avant qu'elle ne soit appliquée sur le circuit d'additionneur (90 ; 200) par une seconde valeur (K2 ; K5) qui est inférieure à la première valeur (K1 ; K4) ; et
un convertisseur numérique-analogique (92 ; 202) pour convertir le signal de sortie numérique provenant du circuit d'additionneur (90 ; 200) en un signal analogique correspondant à utiliser pour commander la rotation du moteur.

2. Appareil selon la revendication 1, dans lequel le circuit de modification de données (190) inclut une porte ET (192) comportant une entrée connectée au second processeur de signal (180) et une autre entrée connectée à une source d'un signal de code (FOH) pour ouvrir la porte ET (192) afin de communiquer la première partie de signal numérique comportant les bits supérieurs de données au circuit de commande de gain (198), et un moyen (194) pour soustraire la première partie de signal numérique de la partie de signal d'erreur de phase numérique afin de produire la seconde partie de signal numérique comportant les bits inférieurs de données.

3. Appareil selon la revendication 2, dans lequel le circuit de modification de données (190) inclut un circuit de retard (195) pour retarder la seconde partie de signal numérique d'un temps prédéterminé et ledit moyen d'addition (191) du circuit de modification de données comprend un additionneur (191) comportant une entrée connectée au second processeur de signal (180) et une autre entrée connectée au circuit de retard (195) pour additionner la seconde partie de signal numérique à la partie de signal d'erreur numérique suivante, l'additionneur comportant une sortie connectée à ladite une entrée de la porte ET (192).

4. Appareil selon la revendication 1, lequel inclut un moyen (74) connecté au premier processeur de signal (70) pour extraire une composante alternative à partir du signal d'erreur de vitesse numérique, et un circuit de filtre en peigne (10a) interposé entre le moyen d'extraction de composante alternative (74) et l'additionneur (90) pour évacuer par filtrage une composante de rotation de moteur, laquelle peut être superposée sur le signal de vitesse à une fréquence de rotation du moteur et à ses harmoniques plus élevés, hors de la composante alternative afin de produire un signal filtré, et dans lequel l'additionneur (90) fonctionne pour additionner le signal d'erreur de vitesse numérique (DS) provenant du premier processeur de signal (70), la première partie de signal numérique provenant du circuit de modification de données (340) et le signal filtré provenant du circuit de filtre en peigne (10a) afin de produire le signal de sortie numérique.

5. Appareil selon la revendication 6, dans lequel le circuit de filtre en peigne (10a) inclut une borne d'entrée (12) connectée au moyen d'extraction de composante alternative (74), une borne de sortie (14) connectée à l'additionneur (90), une pluralité de filtres passe-bas primaires (30A à 30F) et un moyen de commutation (22, 24) pour connecter certains différents des filtres passe-bas primaires (30A, 30F) entre les bornes d'entrée et de sortie (12, 14) selon une séquence prédéterminée pour un nombre prédéterminé de degrés de rotation du moteur.

# FIG. 1

# FIG.2

(a)

FG

(b)

N₁ N₂ N₃ N₄ N₅ N₆

# FIG.6

(a) VP

(b) PG

(c)

M₁ M₂

EP 0 448 136 B1

FIG.3

FIG.4

*FIG.5*

15

## FIG.7

# FIG.8

K₄·DS

| MSB | | | | | | | LSB |

8 BITS

K₅·DP

| MSB | | | | | | | LSB |

4 BITS · 8 BITS

K₄·DS + K₅·DP

| MSB | | | | | | | LSB | | | | |

8 BITS
(USED DATA)

4 BITS
(IGNORED DATA)

# FIG.9

291 · 292 UPPER b BITS · 300

D a BIT

293 S

294

LOWER c BITS

D/A b BITS

150 M

290

295 Z⁻¹

# FIG.10

# FIG.11